# EUROPEAN PATENT APPLICATION

(11) **EP 4 848 575 A1**
(43) Date of publication of application: **02.12.2026**
(21) Application number: 25769804.3
(22) Date of filing: 04.03.2025
(51) Int. Cl.: H02P 21/18

(54) **MONITORING DEVICE FOR MOTOR**

(30) Priority: 13.03.2024 JP 2024039000
(71) Applicant: OMRON Corporation, Kyoto-shi, Kyoto 600-8530 (JP)
(72) Inventor: ONO, Yasushi, Kyoto-shi, Kyoto 600-8530 (JP)
(74) Representative: Isarpatent
(86) International application number: PCT/JP2025/007791
(87) International publication number: WO 2025/192375

(57) **Abstract**

A technique appropriately monitors the speed of a motor. A monitoring device for monitoring, separately from a controller, a speed of a motor driven and controlled by the controller includes a first calculator that detects a drive current of the motor and calculates a first speed of the motor using a phase change in a current vector based on the drive current, a second calculator that calculates an induced voltage in the motor through a predetermined observer process and calculates a second speed of the motor using a phase change in a voltage vector based on the induced voltage, and an output unit that selects, based on an operating state of the motor, one of the first speed calculated by the first calculator or the second speed calculated by the second calculator and outputs the selected speed as an estimated speed of the motor in the operating state.

## Description

### TECHNICAL FIELD

The present invention relates to a monitoring device for monitoring the speed of a motor.

### BACKGROUND OF INVENTION

Power converters that supply power to motors are now requested to comply with functional safety standards such as international standards. In particular, these converters are requested to comply with safety limited speed, which is one of the functional safety standards. Safely limited speed is defined for monitoring a speed exceeding a prescribed speed limit. When the motor speed exceeds the prescribed speed limit, the power converter complying with such safely limited speed interrupts the power supply to stop the motor to achieve safety.

A known technique developed for monitoring the speed of a motor without using an external detector such as an encoder includes detecting the drive current of the motor with a current sensor and monitoring the speed of the motor based on the detected value. For example, Patent Literature 1 describes a technique for monitoring the speed of a motor by applying half-wave rectification to the drive current of the motor detected by a current sensor and calculating the current frequency based on the rising and falling edges of the half-wave rectified current signal.

### CITATION LIST

### PATENT LITERATURE

Patent Literature 1: Japanese Patent No. 6704560

### SUMMARY

### TECHNICAL PROBLEM

When the rising and falling edges of the half-wave rectified current signal are used as with the known technique, such rising edges and other parameters may not be detected appropriately when the current signal is relatively low. In particular, this technique is susceptible to noise and may easily detect incorrect rising edges or other parameters. For example, a motor that decelerates relatively slowly under, for example, a frictional force from an external mechanical element operates at a low drive current. In this case, the above half-wave rectified current signal may have, for example, less noticeable rising edges, and thus may cause difficulty in monitoring the speed of the motor.

For monitoring the motor speed, the current frequency is calculated using the rising and falling edges of the half-wave rectified current signal. This takes a relatively long time for calculating or estimating the motor speed. In particular, lower motor speeds lengthen the cycle of the current signal, causing difficulty in monitoring the motor speed. This tendency is to be avoided to comply with functional safety standards.

In response to the above issue, one or more aspects of the present disclosure are directed to a technique for appropriately monitoring the speed of a motor, and in particular, a technique for appropriately complying with functional safety standards.

### SOLUTION TO PROBLEM

A monitoring device for a motor according to an aspect of the present disclosure is a monitoring device for monitoring, separately from a controller, a speed of a motor driven and controlled by the controller. The monitoring device includes a first calculator that detects a drive current of the motor and calculates a first speed of the motor using a phase change in a current vector based on the drive current, a second calculator that calculates an induced voltage in the motor through a predetermined observer process and calculates a second speed of the motor using a phase change in a voltage vector based on the induced voltage, and an output unit that selects, based on an operating state of the motor, one of the first speed calculated by the first calculator or the second speed calculated by the second calculator and outputs the selected speed as an estimated speed of the motor in the operating state.

The above monitoring device for a motor includes two types of calculation that are calculation of the first speed performed by the first calculator and calculation of the second speed performed by the second calculator. For the calculation of the first speed, the speed (first speed) of the motor is calculated using the phase change in the current vector based on the drive current of the motor. The use of the phase change in the current vector allows stable and prompt monitoring of any motor speed. When the drive current of the motor is low, the phase of the current vector may not be easily calculated accurately. For the calculation of the second speed, the speed (second speed) of the motor is calculated using the phase change in the voltage vector based on the induced voltage in the motor calculated through the predetermined observer process. The use of the voltage vector phase through the observer process allows monitoring of the speed of a motor operating on a low drive current. In other words, the first calculator and the second calculator are complementary to each other in monitoring the motor speed.

The output unit selects either the first speed calculated by the first calculator or the second speed calculated by the second calculator based on the operating state of the motor. More specifically, either the first speed or the second speed being closer to the actual motor speed varies depending on the operating state of the motor. Thus, the output unit performs the above selection based on the operating state of the motor to obtain more appropriate estimation speed. For example, the output unit selects either the first speed or the second speed based on the difference between the deviation of the second speed from the actual motor speed and the deviation of the first speed from the actual motor speed and outputs the selected speed as the estimated speed that is more appropriate for the operating state of the motor.

In the manner described above, the monitoring device for a motor according to one or more embodiments of the present disclosure outputs the estimated speed appropriate for the operating state of the motor based on the characteristics of the first calculator and the second calculator that are complementary to each other in monitoring the motor speed. This sufficiently allows appropriate compliance with functional safety standards and accurately stops the driving of the motor when deviation of the motor speed from an allowable range is detected.

In the above monitoring device, the output unit may output the first speed as the estimated speed when the drive current of the motor is higher than a first reference value. The output unit may output the second speed as the estimated speed when the induced voltage in the motor is higher than a second reference value. The first reference value and the second reference value may be set to cause a speed of the motor at which an output of the first speed is started to be lower than a speed of the motor at which an output of the second speed is started. The first reference value is set for the output of the first speed to avoid the possibility of failing to appropriately calculate the phase change in the current vector when the drive current is low. Setting the first reference value increases the suitability of the first speed for selection as the estimated speed. The second reference value is set for the output of the second speed for the following reasons. The induced voltage is highly correlated with the motor speed, and the accuracy of calculating the induced voltage through the observer process in the second calculator tends to be lower when the motor speed is relatively low. Setting the second reference value increases the suitability of the second speed for selection as the estimated speed.

As described above, the motor speed is to be higher when using the second speed. Thus, the first reference value and the second reference value are set to cause the motor speed at which the first speed can be output to be lower than the motor speed at which the second speed can be output. Setting the two reference values as described above allows outputting the estimated speed appropriate for the operating state of the motor.

In the above monitoring device, at a start of the motor from a stopped state, the output unit may not output the estimated speed until the drive current of the motor exceeds the first reference value. The reasons for this are as follows. As described above, the phase change in the current vector based on the drive current is not easily calculated when the drive current of the motor is relatively low. Further, the motor speed is possibly relatively low at the start of the motor. In such a case, the phase change in the voltage vector based on the induced voltage is not easily calculated appropriately.

In the above monitoring device, at a start of the motor from a stopped state, the output unit may output the first speed as the estimated speed when the drive current of the motor is higher than the first reference value and the induced voltage in the motor is lower than the second reference value. The reasons for this are as follows. As described above, the phase change in the current vector based on the drive current can be appropriately calculated when the drive current of the motor is higher than the first reference value, but the phase change in the voltage vector based on the induced voltage cannot be calculated easily when the induced voltage is lower than the second reference value.

The output unit may output the second speed as the estimated speed when the drive current of the motor is higher than the first reference value and the induced voltage in the motor is higher than the second reference value. When both the first speed and the second speed can be output as the estimated speed, the output unit outputs the second speed as the estimated speed with priority. This is because the second calculator has high calculation accuracy in the observer process when the motor speed is high and thus the induced voltage is relatively high.

In the above monitoring device, after the output unit starts outputting the estimation speed, the output unit may output, as the estimated speed, a third speed in place of the first speed or the second speed when a predetermined state in which the drive current of the motor is lower than the first reference value and the induced voltage in the motor is lower than the second reference value occurs, and the third speed is obtained by decreasing a speed of the motor at a start of the predetermined state based on a duration of the predetermined state. The predetermined state is a state in which the motor speeds calculated by the two calculators cannot be output as the estimated speed although the motor remains operating, with the motor being decelerating toward a stop. In this case, outputting no estimated speed of the motor is to be avoided to ensure safety. Thus, the third speed that can be reasonable is output in place of the first speed or the second speed. In the predetermined state, the motor is decelerating toward a stop. The motor speed is thus actually close to zero, and the third speed used as a substitute is unlikely to cause safety issues in the motor drive control.

With the motor speed being close to zero, the third speed may be obtained by decreasing the motor speed at the start of the predetermined state based on the duration of the predetermined state to allow the third speed to converge to zero. The deceleration rate for calculating the third speed is preset as appropriate based on, for example, the specifications of the motor or the typical driving system of the motor.

In the above monitoring device, after the output unit starts outputting the estimation speed, the output unit may output the second speed as the estimated speed of the motor when the drive current of the motor is lower than the first reference value and the induced voltage in the motor is higher than the second reference value. Such a state may include, for example, a constant speed drive or a slow deceleration drive in which the motor moves at a specific speed and does not generate a corresponding counterforce to external forces. In this case, with the induced voltage higher than the second reference value, the output unit may output the second speed as the estimated speed.

In any one of the monitoring devices described above, the output unit may include a selector that selects one of the first speed or the second speed based on the operating state of the motor, and a proportional-integral (PI) control processor including an integrator that performs a predetermined integration process. The proportional-integral control processor performs, with the integrator, proportional-integral control on a selection result from the selector to calculate the estimated speed. When either the first speed or the second speed is selected, the continuity of the output estimated speed may be lost upon switching the selection. Such continuity loss is to be avoided for safety in the motor drive control. The output unit including the PI control processor thus allows the estimated speed to maintain continuity through the integration process performed by the integrator included in the PI control processor.

The proportional-integral control includes setting a gain, and the gain may be set to be higher for a higher value of the estimated speed than for a lower value of the estimated speed. The gain that is set in this manner in the PI control achieves a balance between the tracking performance of the estimated speed to the actual motor speed and the calculation accuracy of the estimated speed. The target PI control uses at least one of a proportional gain or an integral gain.

In any one of the monitoring devices described above, the first calculator may include a low-pass filter for a detection result of the drive current of the motor. The low-pass filter may have a time constant being set to compensate for a delay time associated with the predetermined observer process performed by the second calculator. The first calculator may calculate the first speed using a phase change in the current vector obtained through the low-pass filter. The second calculator calculates the induced voltage through the observer process, which typically has a delay time. The calculation of the second speed is thus affected by the delay time.

The monitoring device for a motor according to one or more aspects of the present disclosure switches between the first calculator and the second calculator based on the operating state of the motor. The responsiveness for calculating the first speed and the responsiveness for calculating the second speed by the respective calculators are thus to be aligned with each other to a substantially equivalent degree. The low-pass filter is thus included in the first calculator as described above, with its time constant being associated with the delay time in the observer process. This balances the calculation responsiveness between the first speed and the second speed.

### ADVANTAGEOUS EFFECTS OF INVENTION

The technique appropriately monitors the speed of a motor, and in particular, appropriately complies with functional safety standards.

### BRIEF DESCRIPTION OF THE DRAWINGS

[FIG. 1] FIG. 1 is a schematic diagram of a control system including a motor monitoring device according to an embodiment of the present disclosure.
[FIG. 2] FIG. 2 is a diagram of control blocks included in a servo driver and a safety device in the control system shown in FIG. 1.
[FIG. 3] FIG. 3 is a diagram of a coordinate system for speed estimation of a motor.
[FIG. 4] FIG. 4 is a diagram showing a procedure performed by a first calculator included in the safety device.
[FIG. 5A] FIG. 5A is a diagram showing a procedure performed by a second calculator included in the safety device.
[FIG. 5B] FIG. 5B is a diagram of a control structure of an observer process performed by the second calculator.
[FIG. 6] FIG. 6 is a diagram showing a procedure performed by an output unit included in the safety device.
[FIG. 7] FIG. 7 is a flowchart of a speed estimation process performed by a safety device to monitor the motor speed while the motor accelerates from a stopped state to its maximum speed.
[FIG. 8] FIG. 8 is a diagram showing first trends of an estimated induced voltage and a drive current during motor acceleration from a stopped state to a maximum speed and back to a stop, and showing the switching of a speed estimation method during the period.
[FIG. 9] FIG. 9 is a diagram showing second trends of an estimated induced voltage and a drive current during motor acceleration from a stopped state to a maximum speed and back to a stop, and showing the switching of a speed estimation method during the period.

### DESCRIPTION OF EMBODIMENTS

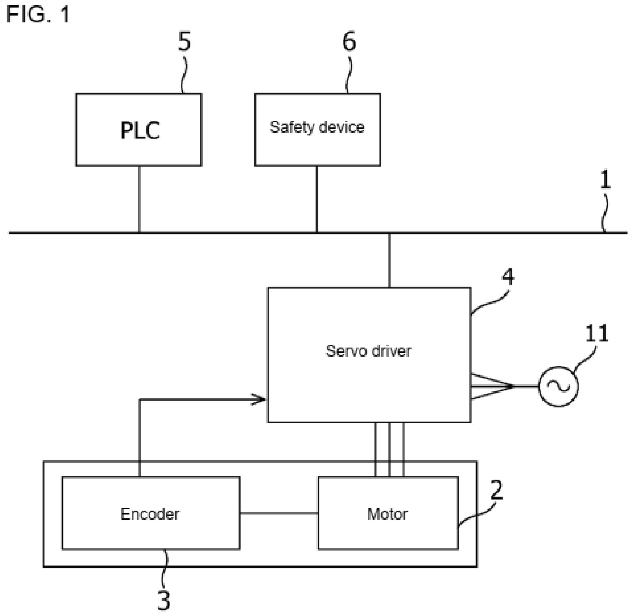

FIG. 1 is a schematic diagram of a control system including a safety device corresponding to a motor monitoring device according to an embodiment of the present invention. The control system in FIG. 1 includes a network 1, a motor 2, a servo driver (hereafter simply referred to as a driver) 4, a programmable logic controller (PLC) 5, and a safety device 6. The control system performs drive control of the motor 2 connected to a load (not shown). Examples of the load connected to the motor 2 include an arm of an industrial robot and a table in a transport device. The motor 2 is an actuator that drives the load. For example, the motor 2 is an alternating current (AC) servomotor. An encoder 3 is attached to the motor 2. The encoder 3 transmits, to the driver 4, a parameter signal for the operation of the motor 2 as feedback. The parameter signal transmitted as feedback (hereafter, a feedback signal) includes, for example, position information about the rotational position (angle) of the rotational shaft of the motor 2 and information indicating the rotational speed of the rotational shaft.

The driver 4 receives, through the network 1, an operation command signal for the operation (motion) of the motor 2 from the PLC 5 and receives the feedback signal output from the encoder connected to the motor 2. The driver 4 performs, based on the operation command signal from the PLC 5 and the feedback signal from the encoder, servo control for driving the motor 2, or specifically, calculates a command value for the operation of the motor 2, and supplies a drive current to the motor 2 to cause the operation of the motor 2 to track the command value. The supplied current is AC power supplied from an AC power supply 11 to the driver 4. The driver 4 is a driver that receives a three-phase AC, but may be a driver that receives a single-phase AC. The servo control performed by the driver 4 is feedback control using, for example, a position controller 41, a speed controller 42, and a current controller 43 included in the driver 4.

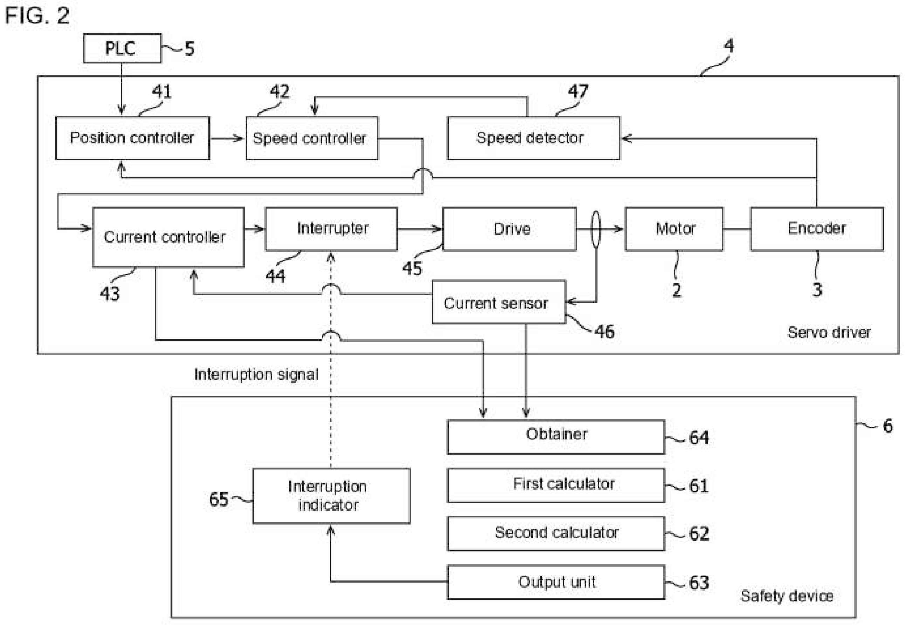

The control structure of the driver 4 will now be described with reference to FIG. 2. FIG. 2 is a diagram of a control structure including control blocks included in the driver 4 and the safety device 6. The control blocks in each device are implemented by an arithmetic processing unit (processor) in the device executing a predetermined program. The driver 4 includes the position controller 41, the speed controller 42, and the current controller 43. The above servo control is performed by these components. The position controller 41 performs, for example, proportional control (P control). More specifically, the position controller 41 calculates a speed command by multiplying a position deviation, which is the difference between the position command from the PLC 5 and the detected position from the encoder 3, by a position proportional gain Kpp.

The speed controller 42 then performs, for example, proportional-integral control (PI control). More specifically, the speed controller 42 calculates a torque command by multiplying the integral of a speed deviation by a speed integral gain Kvi and then multiplying the sum of the result of the calculation and the speed deviation by a speed proportional gain Kvp. The speed deviation is the difference between the speed command calculated by the position controller 41 and the detected speed obtained by a speed detector 47 differentiating the output from the encoder 3. The speed controller 42 may perform P control instead of PI control.

The current controller 43 then outputs a voltage command to be applied to the drive 45 based on the torque command calculated by the speed controller 42 and the drive current (the drive current supplied from the drive 45 to the motor 2) detected by a current sensor 46. More specifically, the current controller 43 generates and outputs the voltage command for the drive 45 to cause the drive current from the drive 45 to be an intended current. The voltage command is, for example, a gate signal for a semiconductor device in the drive 45. The current controller 43 may include a filter (first-order low-pass filter) for the torque command or one or more notch filters. The voltage command is provided to the drive 45 through an interrupter 44.

The drive 45 includes, for example, a circuit including a semiconductor switching element such as an insulated-gate bipolar transistor (IGBT). The drive 45 turns on and off the switching element based on the voltage command from the current controller 43 using pulse-width modulation (PWM). This causes AC power to be supplied to the motor 2 and a drive current to flow through the motor 2 to drive the motor 2. In response to an interruption signal input from the safety device 6, the interrupter 44 enters an interruption mode not to allow the voltage command from the current controller 43 to electrically pass through the drive 45 and thus stops the drive 45. The interrupter 44 thus does not allow a voltage command output from the current controller 43 to reach the drive 45 and stops the output of the torque from the motor 2. When no interruption signal is input into the interrupter 44, the interrupter 44 passes the voltage command output from the current controller 43 to the drive 45 without interruption.

With this control structure, the driver 4 can perform servo control of the motor 2 to cause the motor 2 to track the position command provided from the PLC 5. The safety device 6 will now be described. The safety device 6 monitors the control state of the motor and stops the operation of the motor 2 in response to an unintended control state to ensure safety against the operation of the motor 2. The safety device 6 may monitor any control state that is set as appropriate. The safety device 6 herein uses the speed of the motor 2 as one example of the control state. For example, the safety device 6 monitors the motor speed. When the motor speed is out of a predetermined monitoring range, the safety device 6 detects a safety issue and determines that the motor 2 is to be stopped. The safety device 6 thus transmits an interruption signal to the interrupter 44.

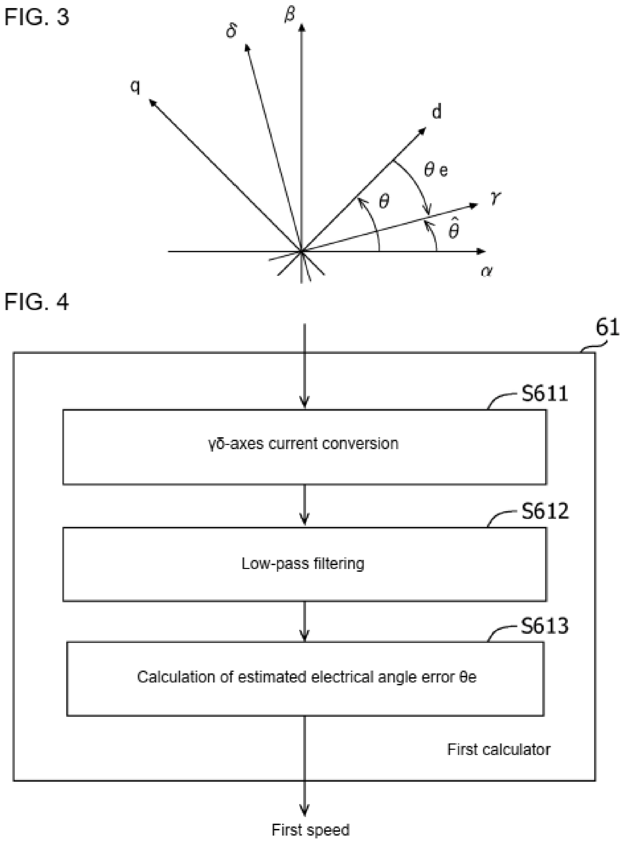

More specifically, the safety device 6 includes functional components that are a first calculator 61, a second calculator 62, an output unit 63, an obtainer 64, and an interruption indicator 65. To describe the functional components, FIG. 3 shows a coordinate system for speed estimation of the motor 2. In the coordinate system shown in FIG. 3, the motor 2 has αβ-axes as a stationary coordinate system and dq-axes as a rotating coordinate system, with the direction of the d-axis being the direction of the magnetic pole of the motor 2. The q-axis is orthogonal to the d-axis. An electrical angle θ is the angle between the α-axis and the d-axis. The motor 2 has γδ-axes as a rotating coordinate system with the direction of the γ-axis being the estimated direction of the magnetic pole of the motor 2. The δ-axis is orthogonal to the γ-axis. When an estimated electrical angle θ^ is the angle between the α-axis and the γ-axis, the estimated electrical angle error θe, which is the difference between the electrical angle θ and the estimated electrical angle θ^, is θe = θ^ - θ. The estimated electrical angle error θe is a parameter that correlates with the motor speed.

The obtainer 64 will be described first. The obtainer 64 is a functional component that obtains parameters for estimating the speed of the motor 2. More specifically, the obtainer 64 obtains the drive current of the motor 2 detected by the current sensor 46 and the voltage command output from the current controller 43. These signals are three-phase signals (U-, V-, and W-phases) in the motor 2. The obtainer 64 thus converts the three-phase signals to two-phase signals based on the αβ-axes. The drive current for the α-axis is denoted with Iα, and the drive current for β-axis with Iβ. The voltage signal for the α-axis is denoted with Vα, and the voltage signal for the β-axis with Vβ.

The first calculator 61 will now be described. The first calculator 61 is a functional component that calculates a first speed of the motor 2 using a phase change in the current vector based on the drive current of the motor 2. FIG. 4 shows a procedure performed by the first calculator 61 to calculate the first speed. The first calculator 61 receives the drive currents Iα and Iβ based on the αβ-axes generated by the obtainer 64, and calculates, in step S611, drive currents Iγ and Iδ based on the γδ-axes using Formula 1 below.
[Math. 1] $\left[\begin{matrix}{I}_{γ} \\ {I}_{δ}\end{matrix}\right] = \left[\begin{matrix}{cosθ}^{∧} & {sinθ}^{∧} \\ - {sinθ}^{∧} & {cosθ}^{∧}\end{matrix}\right] \left[\begin{matrix}{I}_{α} \\ {I}_{β}\end{matrix}\right]$ (Formula 1) When the d-axis current is assumed to be zero (0), the estimated electrical angle error θe based on the phase change in the current vector is calculated using Formula 2 below. The estimated electrical angle error θe calculated with Formula 2 is the first speed (the processing in step S613). The first speed calculated in this manner using the phase change in the current vector allows stable and prompt speed monitoring, independently of the speed of the motor 2. In contrast, when the drive current of the motor 2 is low, the phase of the current vector may not be calculated easily.
[Math. 2] ${θ}_{e} = arctan \left(-\frac{{I}_{γ}}{{I}_{δ}}\right)$ (Formula 2)

In the present embodiment, low-pass filtering is performed between steps S611 and S613 as the processing in step S612. This processing is performed to compensate for the delay time in an observer process (the processing in step S621) performed by the second calculator 62 (described later). The low-pass filtering aligns the responsiveness of the first calculator 61 for calculating the first speed with the responsiveness of the second calculator 62 for calculating a second speed to a substantially equivalent degree. More specifically, the time constant in the low-pass filtering in step S612 is set based on the delay time in the observer process in step S621.

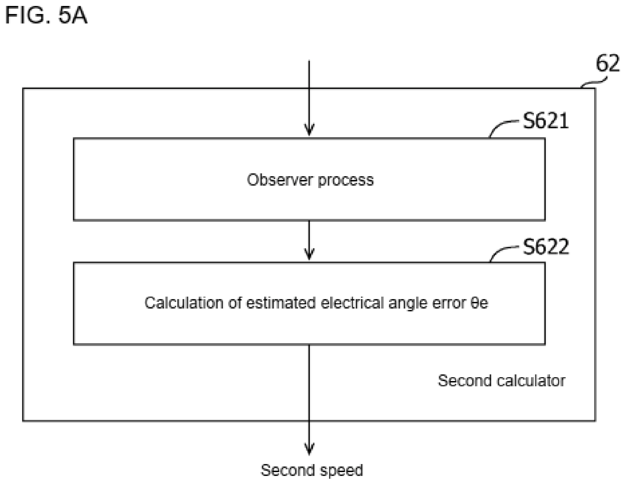

The second calculator 62 will now be described. The second calculator 62 is a functional component that calculates the second speed of the motor 2 using a phase change in a voltage vector based on the induced voltage in the motor 2. FIG. 5A shows a procedure performed by the second calculator 62 for calculating the second speed. In this example, the motor 2 is a surface permanent magnet synchronous motor (SPMSM), and the positions of the magnetic poles are estimated based on the induced voltage. The voltage equation for the motor 2 based on the αβ-axes is Formula 3 below.
[Math. 3] $\left[\begin{matrix}{V}_{α} \\ {V}_{β}\end{matrix}\right] = \left[\begin{matrix}R + pL & 0 \\ 0 & R + pL\end{matrix}\right] \left[\begin{matrix}{I}_{α} \\ {I}_{β}\end{matrix}\right] + {ωK}_{e} \left[\begin{matrix}- sin θ \\ cos θ\end{matrix}\right]$ (Formula 3) In this formula, R is the armature resistance, L is the inductance, Ke is the induced voltage constant, θ is the electrical angle, ω is the electrical angular speed, and p is the differential operator.
Further, Formula 3 is dq-transformed to yield Formula 4 below.
[Math. 4] $\left[\begin{matrix}{V}_{d} \\ {V}_{q}\end{matrix}\right] = \left[\begin{matrix}R + pL & - ωL \\ ωL & R + pL\end{matrix}\right] \left[\begin{matrix}{I}_{d} \\ {I}_{q}\end{matrix}\right] + {ωK}_{e} \left[\begin{matrix}0 \\ 1\end{matrix}\right]$ (Formula 4) Formula 4 is further γδ-transformed to yield Formula 5 below.
[Math. 5] $\left[\begin{matrix}{V}_{γ} \\ {V}_{δ}\end{matrix}\right] = \left[\begin{matrix}R + pL & - ωL \\ ωL & R + pL\end{matrix}\right] \left[\begin{matrix}{I}_{γ} \\ {I}_{δ}\end{matrix}\right] + {ωK}_{e} \left[\begin{matrix}- {sinθ}_{e} \\ {cosθ}_{e}\end{matrix}\right]$ (Formula 5) Based on Formula 5, an induced voltage e based on the γδ-axes is expressed by Formula 6 below.
[Math. 6] $\left[\begin{matrix}{e}_{γ} \\ {e}_{δ}\end{matrix}\right] = {ωK}_{e} \left[\begin{matrix}- {sinθ}_{e} \\ {cosθ}_{e}\end{matrix}\right]$ (Formula 6) The estimated electrical angle error θe based on the phase change in the voltage vector of the induced voltage is calculated using Formula 7 below. The estimated electrical angle error θe calculated with Formula 7 is the second speed (the processing in step S622).
[Math. 7] ${θ}_{e} = arctan \left(-\frac{{e}_{γ}}{{e}_{δ}}\right)$ (Formula 7)

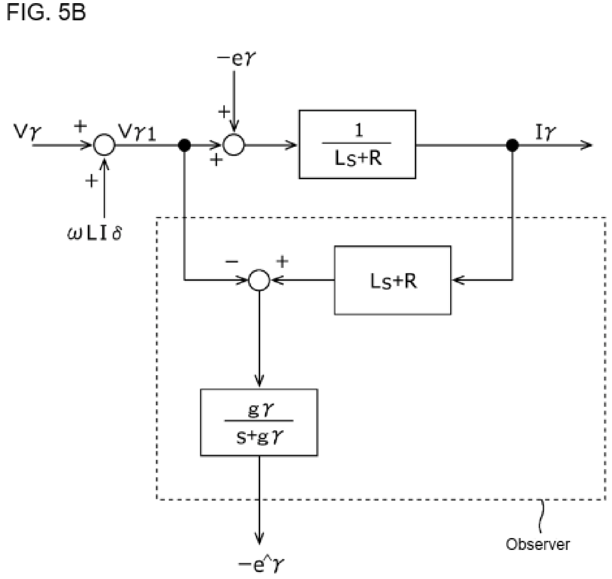

In the present embodiment, the calculation of the second speed performed by the second calculator 62 with Formulas 3 to 7 is specifically an observer process performed in step S621. The observer process is a known technique and will not be described in detail. FIG. 5B shows an observer circuit as an example of the observer process, in which the induced voltage e based on the γδ-axes is estimated with Formula 8 (described below). The observer circuit shown in FIG. 5B is for the γ-axis. A person skilled in the art will understand that the observer circuit for the δ-axis is formed in the same manner.
[Math. 8] $\begin{matrix}- {e}_{γ}^{∧} = \frac{{g}_{γ}}{s + {g}_{γ}} \left({RI}_{γ}-\left({V}_{γ}+{ωLI}_{δ}\right)\right) + {Lg}_{γ} \frac{s}{s + {g}_{γ}} {I}_{γ} \\ - {e}_{δ}^{∧} = \frac{{g}_{δ}}{s + {g}_{δ}} \left({RI}_{δ}-\left({V}_{δ}-{ωLI}_{γ}\right)\right) + {Lg}_{δ} \frac{s}{s + {g}_{δ}} {I}_{δ}\end{matrix}$ (Formula 8) In the formula, gγ is the observer gain for the γ-axis, and gδ is the observer gain for the δ-axis.
In this manner, the second speed is calculated using the phase of the voltage vector through the observer process. This allows monitoring of the motor speed when the motor 2 operates on a low drive current. Additionally, the use of the observer process reveals a tendency that higher speeds of the motor 2 increase the calculation accuracy of the second speed. The first calculator 61 and the second calculator 62 are thus complementary to each other in monitoring the speed of the motor 2.

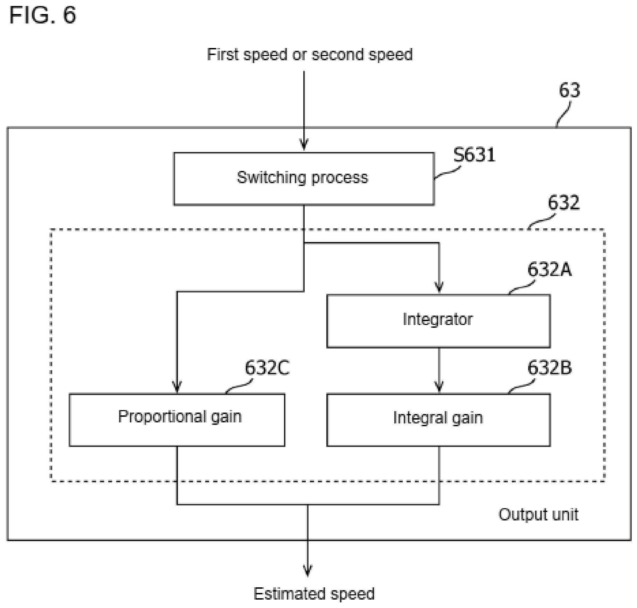

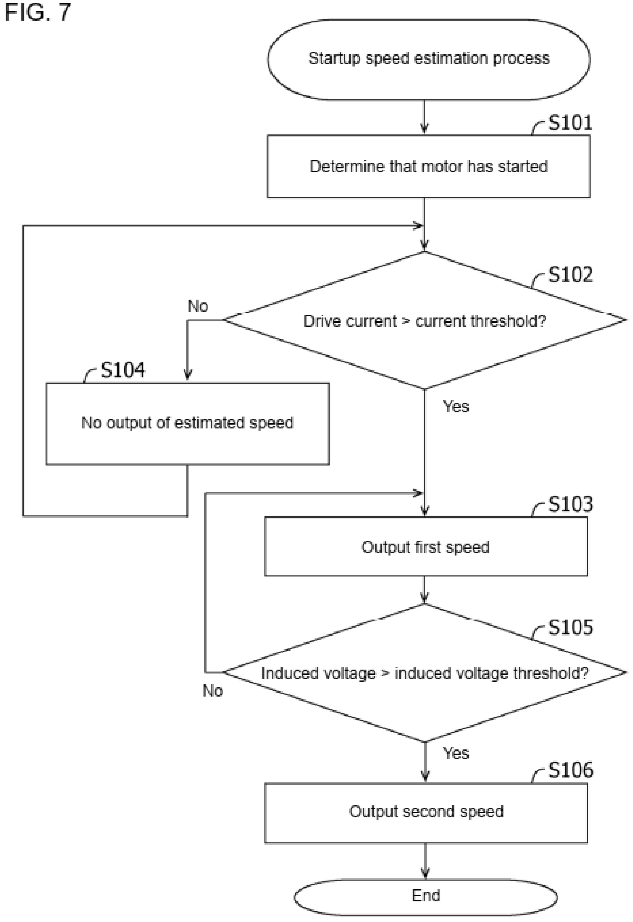

The output unit 63 will now be described. The output unit 63 is a functional component that selects either the first speed or the second speed based on the operating state of the motor 2 and outputs the selected speed as the estimated speed of the motor 2. FIG. 6 shows the procedure performed by the output unit 63. The output unit 63 receives the inputs of both the first speed calculated by the first calculator 61 and the second speed calculated by the second calculator 62. The output unit 63 then performs a switching process to select either the first speed or the second speed based on the operating state of the motor 2 (the processing in step S631). A specific embodiment of the switching process will be described in detail later with reference to FIGs. 7 to 9. The output unit 63 performs this switching process to output an estimated speed appropriate for the operating state of the motor 2 based on the characteristics of the first calculator 61 and the second calculator 62 that are complementary to each other in monitoring the speed of the motor 2. This structure is highly useful for appropriately complying with functional safety standards.

The first speed and the second speed may or may not match each other or may or may not be close to each other. When the difference between the first speed and the second speed is too large during the switching process, the estimated speed after the switching process may be substantially discontinuous, not allowing intended speed monitoring for the motor 2. In the present embodiment, when either the first speed or the second speed is selected in the switching process, a PI control processor 632 calculates an estimated speed by performing PI control on the selected calculated speed using an integrator 632A, without immediately outputting the selected calculated speed as the estimated speed. As shown in FIG. 6, the PI control processor 632 includes a proportional gain 632C, the integrator 632A, and an integral gain 632B to implement PI control for calculating the estimated speed. In the PI control, the estimated speed of the motor 2 is updated cyclically as the output of the PI control, and the estimated electrical angle of the motor 2 is updated based on the estimated speed. In the above cyclic processing, the estimated electrical angle error (the error θe described above) is calculated based on the parameters such as the updated estimated electrical angle, the voltage command, and the drive current. The arithmetic operation is performed to eliminate the estimated electrical angle, or in other words, to cause the estimated electrical angle to track the actual electrical angle. The estimation speed calculated through the PI control has appropriate continuity, and is output as an output from the PI control processor 632.

The integral gain 632B may be set to be higher for a higher estimated speed after the switching process than for a lower estimated speed. In one example, the integral gain may be set to be higher for higher estimated speeds or may be set to be higher in a stepwise manner in response to an increase in the estimated speed. In some embodiments, the proportional gain 632C may be set to be higher for higher estimated speeds or may be set to be higher in a stepwise manner in response to an increase in the estimated speed, similarly to the integral gain 632B. Both the integral gain 632B and the proportional gain 632C may be changed in the same manner based on the estimated speed. The integral gain 632B and the proportional gain 632C set in this manner can achieve a balance between the tracking performance of the estimated speed to the actual speed of the motor 2, or specifically, the output of the estimated speed from the output unit 63, and the calculation accuracy of the estimated speed.

The interruption indicator 65 will now be described. The interruption indicator 65 is a functional component that generates an interruption signal and transmits the interruption signal to the interrupter 44 in the driver 4 when the estimated speed output from the output unit 63 is determined to be out of the predetermined monitoring range. The interrupter 44 that has received the interruption signal interrupts transmission of the voltage command from the current controller 43 to the drive 45 as described above to stop the output of the torque from the motor 2.

### <First Embodiment>

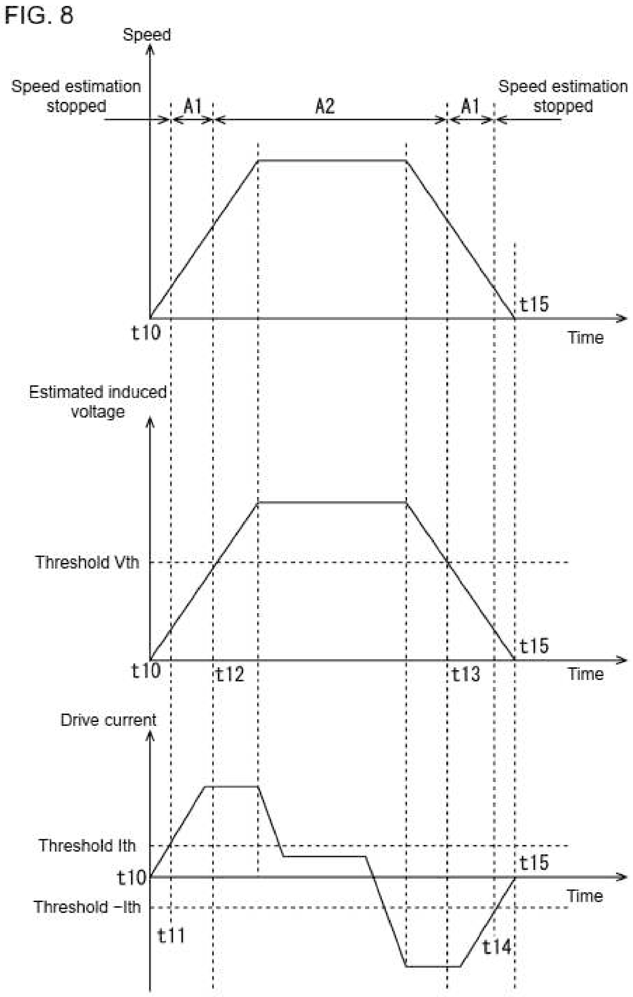

The switching process performed by the output unit 63 in a first embodiment, or specifically, the process of selecting either the first speed or the second speed based on the operating state of the motor 2, will now be described in detail with reference to FIGs. 7 and 8. FIG. 7 is a flowchart of a startup speed estimation process performed by the safety device 6. This process is implemented in response to the arithmetic processing device (processor) included in the safety device 6 executing a predetermined control program. FIG. 8 shows the trends of the estimated speed of the motor 2 (the speed output from the output unit 63), the induced voltage in the motor 2 (based on the γδ-axes), and the drive current of the motor 2 (based on the γδ-axes) during the startup speed estimation process. In FIG. 8, time t10 is the time at which the motor 2 in a stopped state starts moving. In S101, the start of the motor 2 is first determined. For example, a signal associated with a motion of the motor 2 (e.g., a detection signal from the encoder 3) provided from the driver 4 is used to determine that the motor 2 in the stopped state has started moving.

In S102, a determination is performed as to whether the drive current of the started motor 2 is higher than a current threshold Ith. In FIG. 8, the current threshold Ith is set both in the positive and negative directions. Thus, in S102, the determination is actually performed as to whether the absolute value of the drive current is higher than the current threshold Ith. The current threshold Ith is a parameter corresponding to a first reference value in an aspect of the present disclosure. As described above, in calculating the first speed with the first calculator 61, a difference in the current vector is not easily calculated when the drive current is too low. The current threshold Ith is thus set based on the calculation accuracy of the first speed. When the determination result is affirmative in S102, the processing advances to S103. When the determination result is negative in S102, the processing advances to S104.

When the processing advances to S103 at the start of the motor 2, the motor 2 is in the process of increasing its speed from zero. Thus, the induced voltage in the motor 2 is below an induced voltage threshold Vth (described later) at the time point. More specifically, at the start of the motor 2, the two thresholds are set to allow the drive current to exceed the threshold Ith before the induced voltage reaches the induced voltage threshold Vth. In FIG. 8, the processing in S103 is performed in response to the drive current exceeding the threshold Ith at time t11. In S103, the first speed calculated by the first calculator 61 is selected by the output unit 63 as described above, and is output as the estimated speed through PI control performed by the PI control processor 632.

When the processing advances to S104 in response to a negative determination result in S102, the output unit 63 does not output an estimated speed in S104. This reduces the likelihood that an inappropriate first speed caused by a low drive current is output. When the processing in step S104 ends, the processing in step S102 and subsequent steps is repeated.

When the processing in step S103 ends, the processing advances to step S105. In S105, a determination is performed as to whether the induced voltage in the motor 2 is higher than the induced voltage threshold Vth. The induced voltage threshold Vth is a parameter corresponding to a second reference value in an aspect of the present disclosure. The calculation of the second speed with the second calculator 62 uses the voltage vector of the induced voltage, and thus is less susceptible to the magnitude of the drive current. The accuracy of calculating the second speed with the second calculator 62 is higher for higher speeds of the motor 2, with the induced voltage being proportional to the motor speed. Thus, at the start of the motor 2, the second speed calculated by the second calculator 62 may be output as the estimated speed when the speed of the motor 2 has relatively increased after the drive current exceeds the threshold Ith. The threshold for determining the timing to switch the output from the output unit 63 to the second speed from the first speed is the induced voltage threshold Vth. When the determination result is affirmative in S105, the processing advances to S106. When the determination result is negative, the processing in S103 and subsequent steps is repeated.

When the processing advances to S106 at the start of the motor 2, the motor 2 is in the process of increasing its speed from zero. At that time, the drive current of the motor 2 is higher than the threshold Ith, and the induced voltage in the motor 2 is higher than the induced voltage threshold Vth. Although the drive current is higher than the threshold Ith, the speed output from the output unit 63 is switched from the first speed to the second speed to improve the calculation accuracy of the estimated speed. In FIG. 8, the induced voltage exceeds the induced voltage threshold Vth at time t12, and the processing in S106 is performed. When switched in this manner as well, the continuity of the output estimation speed is substantially maintained by the PI control processor 632 shown in FIG. 6.

As described above, the period from when the motor 2 starts from the speed stop state to when the first speed and the second speed are output sequentially is the period in which the startup speed estimation process shown in FIG. 7 is performed. In this period, the threshold Ith and the induced voltage threshold Vth are set to cause the speed of the motor 2 at which the first speed can be output to be lower than the speed of the motor 2 at which the second speed can be output. More specifically, as shown in the upper part of FIG. 8, the output unit 63 outputs no estimated speed from time t10 to time t11, outputs the first speed in a period A1 from time t11 to time t12, and outputs the second speed in a period A2 from time t12 to time t13 (described later).

When the motor 2 reaches the maximum speed and maintains the maximum speed at or after time t12, the acceleration of the motor 2 has ended. Thus, the drive current is lower than the threshold Ith, and the induced voltage in the motor 2 is higher than the induced voltage threshold. In this state, the output unit 63 outputs the second speed as the estimated speed based on the high speed of the motor 2. Thus, when the motor 2 operates at the maximum speed, the output of the second speed is maintained, and the period A2 continues from time t12.

When the motor 2 starts decelerating, the drive current exceeds the threshold Ith due to the deceleration. However, the induced voltage is still higher than the induced voltage threshold Vth. The output of the second speed is thus maintained, and the period A2 continues from time t12. When the motor 2 further decelerates and the induced voltage falls below the induced voltage threshold Vth, the estimated speed output from the output unit 63 is switched from the second speed to the first speed. In FIG. 8, the induced voltage falls below the induced voltage threshold Vth at time t13, and the drive current is higher than the threshold Ith at time t13. Thus, time t13 is the switching time. At or after time t13, the period A1 thus starts again to output the first speed.

When the motor 2 decelerates further, the drive current of the motor 2 falls below the threshold Ith. In FIG. 8, time t14 is the time point at which the drive current of the motor 2 falls below the threshold Ith. Thus, the period A1 that has started at time t13 continues until time t14. At or after time t14 and up to time t15 at which the motor 2 stops, the speed estimation for monitoring the speed of the motor 2, or in other words, the output from the output unit 63, is not performed.

### <Second Embodiment>

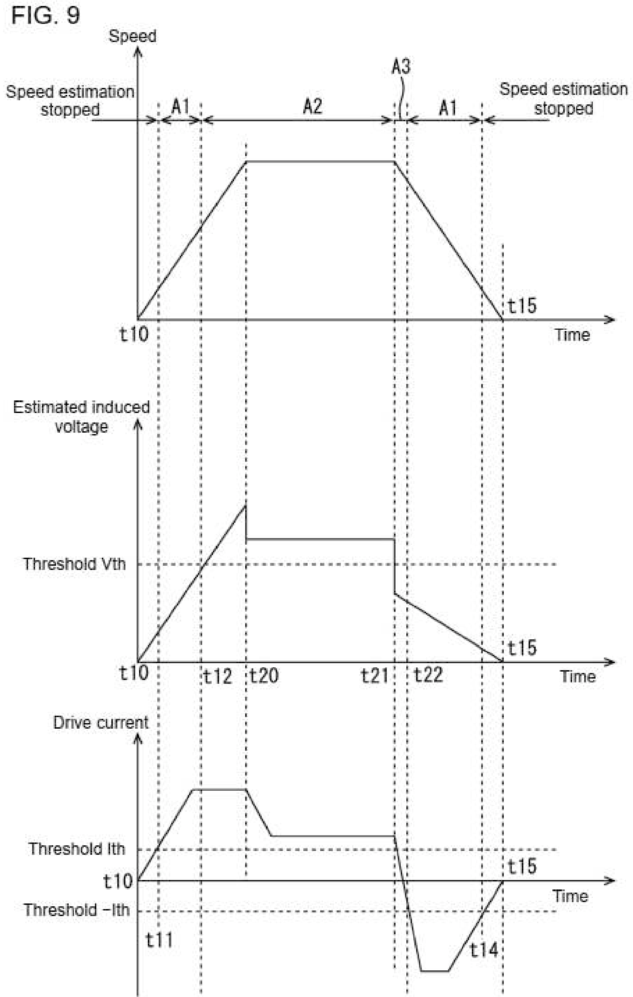

The switching process performed by the output unit 63 in a second embodiment will now be described in detail with reference to FIG. 9. More specifically, the process of selecting either the first speed or the second speed based on the operating state of the motor 2 in the second embodiment will now be described. FIG. 9 shows the trends of the estimated speed of the motor 2 (the speed output from the output unit 63), the induced voltage in the motor 2 (based on the γδ-axes), and the drive current of the motor 2 (based on the γδ-axes) in the present embodiment in which the estimated speed is output from the output unit 63. Time t10 in FIG. 9 is the time at which the motor 2 starts moving from the stopped state. The other times t12, t14, and t15 are the same as the times in the first embodiment shown in FIG. 8, and will not be described in detail.

The motor 2 may show non-linear inductance characteristics due to, for example, magnetic saturation or its AC resistance. The induced voltage can thus remain relatively lower than the induced voltage in the embodiment shown in FIG. 8. More specifically, as shown in the middle part of FIG. 9, the induced voltage decreases nonlinearly at time t20 at which the motor 2 reaches the maximum speed, and also decreases nonlinearly at time t21 at which the motor 2 starts decelerating from the maximum speed. In this case, at time t21 in particular, the induced voltage falls below the induced voltage threshold Vth, and the drive current is lower than the threshold Ith immediately after the start of deceleration. This state corresponds to a predetermined state in an aspect of the present disclosure. The predetermined state thus continues until the drive current exceeds the threshold Ith at time t22.

In a period A3 during which such a predetermined state continues, or in the period from time t21 to time t22 in FIG. 9, the drive current and the induced voltage are not in the state of allowing the first speed or the second speed to be output. The predetermined state is expected to occur when the speed of the motor 2 changes greatly. At such times, outputting an inaccurate motor speed using, for example, the first speed is to be avoided, and performing no estimation of the motor speed is also to be avoided. In the present embodiment, in the period A3 during which the predetermined state occurs, the output unit 63 outputs, as the estimated speed, a third speed in place of the first speed or the second speed, with the motor 2 decelerating toward a stop. The third speed is obtained by decreasing, at a predetermined deceleration rate, a motor speed Vt21 at the start time t21 of the predetermined state based on the duration of the predetermined state. The third speed may finally reach 0 (zero) when the predetermined state continues for a relatively long time. The deceleration rate for calculating the third speed is preset as appropriate based on, for example, the specifications of the motor 2 or the typical driving system of the motor 2.

Any form of outputting the estimated speed from the output unit 63 based on the operating state of the motor 2, which is not described herein, may also be used unless any technical contradiction arises against the present disclosure.

### <Aspect 1>

A monitoring device (6) for monitoring, separately from a controller (5), a speed of a motor (2) driven and controlled by the controller (5), the monitoring device (6) comprising:
a first calculator (61) configured to detect a drive current of the motor (2) and calculate a first speed of the motor using a phase change in a current vector based on the drive current;
a second calculator (62) configured to calculate an induced voltage in the motor (2) through a predetermined observer process and calculate a second speed of the motor using a phase change in a voltage vector based on the induced voltage; and
an output unit (63) configured to select, based on an operating state of the motor (2), one of the first speed calculated by the first calculator (61) or the second speed calculated by the second calculator (62) and output the selected speed as an estimated speed of the motor in the operating state.

### <Aspect 2>

The monitoring device (6) according to aspect 1, wherein
the output unit (63) outputs the first speed as the estimated speed when the drive current of the motor (2) is higher than a first reference value (Ith),
the output unit (63) outputs the second speed as the estimated speed when the induced voltage in the motor (2) is higher than a second reference value (Vth), and
the first reference value (Ith) and the second reference value (Vth) are set to cause a speed of the motor (2) at which an output of the first speed is possible to be lower than a speed of the motor (2) at which an output of the second speed is possible.

### <Aspect 3>

The monitoring device according to aspect 2, wherein
at a start of the motor (2) from a stopped state, the output unit (63) does not output the estimated speed until the drive current of the motor exceeds the first reference value.

### <Aspect 4>

The monitoring device (6) according to aspect 2, wherein
at a start of the motor (2) from a stopped state, the output unit (63) outputs the first speed as the estimated speed when the drive current of the motor (2) is higher than the first reference value (Ith) and the induced voltage in the motor (2) is lower than the second reference value (Vth).

### <Aspect 5>

The monitoring device (6) according to aspect 4, wherein
the output unit (63) outputs the second speed as the estimated speed when the drive current of the motor (2) is higher than the first reference value (Ith) and the induced voltage in the motor (2) is higher than the second reference value (Vth).

### <Aspect 6>

The monitoring device (6) according to aspect 2, wherein
after the output unit (63) starts outputting the estimation speed, the output unit (63) outputs, as the estimated speed, a third speed in place of the first speed or the second speed when a predetermined state in which the drive current of the motor (2) is lower than the first reference value (Ith) and the induced voltage in the motor (2) is lower than the second reference value (Vth) occurs, and the third speed is obtained by decreasing a speed of the motor at a start of the predetermined state based on a duration of the predetermined state.

### <Aspect 7>

The monitoring device (6) according to aspect 2, wherein
after the output unit (63) starts outputting the estimation speed, the output unit (63) outputs the second speed as the estimated speed of the motor (2) when the drive current of the motor (2) is lower than the first reference value (Ith) and the induced voltage in the motor (2) is higher than the second reference value (Vth).

### <Aspect 8>

The monitoring device (6) according to any one of aspects 1 to 7, wherein
the output unit (63) includes
a selector configured to select one of the first speed or the second speed based on the operating state of the motor (2), and
a proportional-integral control processor (632) including an integrator (632A) configured to perform a predetermined integration process, the proportional-integral control processor (632) being configured to perform, with the integrator (632A), proportional-integral control on a selection result from the selector to calculate the estimated speed.

### <Aspect 9>

The monitoring device (6) according to aspect 8, wherein
the integration process performed by the integrator (632A) includes setting an integral gain (632B), and the integral gain is set to be higher for a higher value of the estimated speed than for a lower value of the estimated speed.

### <Aspect 10>

The monitoring device (6) according to any one of aspects 1 to 9, wherein
the first calculator (61) includes a low-pass filter for a detection result of the drive current of the motor (2), and the low-pass filter has a time constant being set to compensate for a delay time associated with the predetermined observer process performed by the second calculator, and
the first calculator (61) calculates the first speed using a phase change in the current vector obtained through the low-pass filter.

### REFERENCE SIGNS

- 2: motor
- 3: encoder
- 4: servo driver (driver)
- 5: PLC
- 6: safety device
- 61: first calculator
- 62: second calculator
- 63: output unit
- 65: interruption indicator
- 632: PI control processor
- 632A: integrator
- 632B: integral filter

## Claims

1. A monitoring device for monitoring, separately from a controller, a speed of a motor driven and controlled by the controller, the monitoring device comprising:
a first calculator configured to detect a drive current of the motor and calculate a first speed of the motor using a phase change in a current vector based on the drive current;
a second calculator configured to calculate an induced voltage in the motor through a predetermined observer process and calculate a second speed of the motor using a phase change in a voltage vector based on the induced voltage; and
an output unit configured to select, based on an operating state of the motor, one of the first speed calculated by the first calculator or the second speed calculated by the second calculator and output the selected speed as an estimated speed of the motor in the operating state.

2. The monitoring device according to claim 1, wherein
the output unit outputs the first speed as the estimated speed when the drive current of the motor is higher than a first reference value,
the output unit outputs the second speed as the estimated speed when the induced voltage in the motor is higher than a second reference value, and
the first reference value and the second reference value are set to cause a speed of the motor at which an output of the first speed is possible to be lower than a speed of the motor at which an output of the second speed is possible.

3. The monitoring device according to claim 2, wherein
at a start of the motor from a stopped state, the output unit does not output the estimated speed until the drive current of the motor exceeds the first reference value.

4. The monitoring device according to claim 2, wherein
at a start of the motor from a stopped state, the output unit outputs the first speed as the estimated speed when the drive current of the motor is higher than the first reference value and the induced voltage in the motor is lower than the second reference value.

5. The monitoring device according to claim 4, wherein
the output unit outputs the second speed as the estimated speed when the drive current of the motor is higher than the first reference value and the induced voltage in the motor is higher than the second reference value.

6. The monitoring device according to claim 2, wherein
after the output unit starts outputting the estimation speed, the output unit outputs, as the estimated speed, a third speed in place of the first speed or the second speed when a predetermined state in which the drive current of the motor is lower than the first reference value and the induced voltage in the motor is lower than the second reference value occurs, and the third speed is obtained by decreasing a speed of the motor at a start of the predetermined state based on a duration of the predetermined state.

7. The monitoring device according to claim 2, wherein
after the output unit starts outputting the estimation speed, the output unit outputs the second speed as the estimated speed of the motor when the drive current of the motor is lower than the first reference value and the induced voltage in the motor is higher than the second reference value.

8. The monitoring device according to any one of claims 1 to 7, wherein
the output unit includes
a selector configured to select one of the first speed or the second speed based on the operating state of the motor, and
a proportional-integral control processor including an integrator configured to perform a predetermined integration process, the proportional-integral control processor being configured to perform, with the integrator, proportional-integral control on a selection result from the selector to calculate the estimated speed.

9. The monitoring device according to claim 8, wherein
the proportional-integral control includes setting a gain, and the gain is set to be higher for a higher value of the estimated speed than for a lower value of the estimated speed.

10. The monitoring device according to any one of claims 1 to 7, wherein
the first calculator includes a low-pass filter for a detection result of the drive current of the motor, and the low-pass filter has a time constant being set to compensate for a delay time associated with the predetermined observer process performed by the second calculator, and
the first calculator calculates the first speed using a phase change in the current vector obtained through the low-pass filter.
